# FASCICULE DE BREVET EUROPEEN

(11) **EP 2 585 878 B1**
(45) Date de publication et mention de la délivrance du brevet: **17.04.2019**
(21) Numéro de dépôt: 11729097.3
(22) Date de dépôt: 22.06.2011
(51) Int. Cl.: G04B 15/14, B21D 39/00, B23P 6/00, G04D 3/00, G04B 13/02

(54) **PROCEDE DE REGLAGE DE LA POSITION RELATIVE D'UNE PREMIERE ET D'UNE SECONDE PIECES D'UN ENSEMBLE MECANIQUE**
VERFAHREN ZUR REGULIERUNG EINER RELATIVEN POSITION EINES ERSTEN TEILS UND EINES ZWEITEN TEILS EINER MECHANISCHEN ANORDNUNG
METHOD FOR REGULATING THE RELATIVE POSITION OF A FIRST PART AND A SECOND PART OF A MECHANICAL ASSEMBLY

(30) Priorité: 22.06.2010 CH 10202010; 22.06.2010 CH 10222010
(43) Date de publication de la demande: 01.05.2013
(73) Titulaire: The Swatch Group Research and Development Ltd, 2074 Marin (CH)
(72) Inventeur: WINKLER, Yves, CH-3185 Schmitten (CH); BOURBAN, Stewes, CH-1588 Cudrefin (CH); DUBACH, Alban, CH-2502 Bienne (CH)
(74) Mandataire: Giraud, Eric
(86) Numéro de dépôt international: PCT/EP2011/060404
(87) Numéro de publication internationale: WO 2011/161138

(56) Documents cités:
- EP-A1- 2 138 323
- EP-A1- 2 180 385
- EP-A1- 2 317 406
- US-A1- 2009 196 125

## Description

La présente invention concerne un procédé de réglage d'un dispositif. Le dispositif comprend une première pièce et au moins une seconde pièce, ladite au moins une seconde pièce étant fixée à la première pièce par l'intermédiaire d'un joint disposé entre lesdites première et seconde pièces.

Le domaine technique de l'invention est le domaine de la mécanique.

### ARRIERE PLAN TECHNOLOGIQUE

Il existe de nombreux dispositifs qui nécessitent, après leur fabrication, une étape de réglage afin d'être parfaitement conformes. Ce besoin d'une grande précision est présent, par exemple, dans les domaines microtechniques comme l'horlogerie. En effet, le monde de l'horlogerie travaille avec des dimensions allant du millimètre au centième de millimètre. Parmi les exemples de dispositifs dont la précision est importante, on trouve les rouages ou encore l'échappement. Effectivement, l'échappement est constitué d'une ancre et d'une roue d'échappement coopérant ensemble. La rotation de cette dernière est régulée par l'ancre du système d'échappement dont les impulsions sont fournies par un balancier spiral. Le système d'échappement comporte ainsi une ancre montée en pivotement sur un axe. Cette ancre comprend une baguette munie, à une première extrémité, d'une fourchette destinée à coopérer avec une cheville montée sur un plateau, et munie, à une seconde extrémité, de bras destinés à recevoir des palettes afin de coopérer avec la roue d'échappement. Lors de son fonctionnement, l'ancre pivote sur son axe de sorte que les palettes des bras entrent en contact avec les dents de la roue d'échappement afin de réguler la rotation des rouages. Or, si les palettes de l'ancre ne sont pas bien positionnées, les impulsions entre les palettes de l'ancre et la roue d'échappement ne sont pas parfaites et des pertes apparaissent affectant ainsi l'efficacité de l'échappement et donc la précision de la montre. Actuellement, l'assemblage des palettes sur une ancre se fait en utilisant une gomme laque qui est un produit naturel présentant des propriétés semblables à celles des matériaux thermoplastiques. Ces propriétés permettent, en réchauffant localement l'ancre, de repositionner les palettes relativement à l'ancre. Cependant, la qualité de la gomme laque fluctue fortement d'un lot à l'autre, ce qui rend l'opération de repositionnement délicate. De plus, la viscosité de la gomme laque étant difficilement contrôlable et comme il est difficile de contrôler le volume de colle déposé, il arrive souvent que la gomme déborde, ce qui entraîne des défauts esthétiques qui peuvent être inacceptables. En outre, la gomme laque étant un matériau organique, elle est sujette au vieillissement et, par conséquent, la fixation de la palette peut être fragilisée.

Une autre possibilité serait d'utiliser le brasage ou le soudage. Néanmoins, ces deux solutions sont également problématiques car pour avoir une chance de souder un matériau céramique ou silicium ou minéral, il faut avoir recours à la brasure/soudure réactive qui doit être réalisée à relativement haute température (généralement supérieure 700°C) et sous atmosphère neutre ou sous vide poussé. Ceci engendre des cycles d'assemblage très longs et des risques de rupture/fissuration du matériau sont possibles.

Le document EP2180385 divulgue un procédé de sertissage d'une pierre en rubis dans une platine en matériau amorphe.

### RESUME DE L'INVENTION

L'invention a pour but de pallier les inconvénients de l'art antérieur en proposant de fournir un procédé de réglage simple, fiable et précis.

A cet effet, l'invention concerne le procédé de réglage selon les revendications annexées.

Un premier avantage de la présente invention est de permettre un réglage contrôlé de la position de la seconde pièce par rapport à la première pièce. En effet, les matériaux au moins partiellement amorphes comme les métaux amorphes ont la capacité de se ramollir fortement lorsqu'ils sont chauffés à une température comprise entre leur température de transition vitreuse et leur température de cristallisation. Dans cet intervalle de température, les métaux amorphes ont une viscosité qui diminue fortement, la diminution de la viscosité étant dépendante de la température : plus la température est élevée, plus la viscosité diminue. Cette viscosité qui diminue permet ainsi d'affaiblir la fixation de sorte que la seconde pièce puisse être déplacée pour modifier sa position et lui donner une position précise désirée. La viscosité peut alors être réglée de sorte à simplifier ledit procédé de réglage.

Un autre avantage de ce procédé est qu'il est reproductible dans le sens où, une fois le métal amorphe refroidi afin d'être solide, il est possible de le réchauffer à une température comprise entre sa température de transition vitreuse et sa température de cristallisation pour modifier la position de la deuxième pièce par rapport à la première si celle-ci ne devait pas être parfaite.

Des modes de réalisation avantageux de ce procédé font l'objet des revendications dépendantes.

Dans un mode de réalisation avantageux, ledit alliage métallique comprend au moins un élément métallique du type précieux et choisi dans le groupe formé par l'or, le platine, le palladium, le rhénium, le ruthénium, le rhodium, l'argent, l'iridium ou l'osmium.

Dans un autre mode de réalisation avantageux, dans l'étape de chauffage, la température de chauffage est sélectionnée pour obtenir une viscosité déterminée du premier matériau.

Dans un mode ultérieur de réalisation avantageux, le procédé comprend en outre une étape de cristallisation dudit premier matériau consistant à chauffer ledit premier matériau à une température comprise entre sa température de transition vitreuse et sa température de fusion, à maintenir ledit matériau durant un certain temps à cette température, et à refroidir.

Dans un mode de réalisation avantageux, la température et le temps de maintient dudit premier matériau est choisi de façon à aboutir à un taux de cristallisation déterminé.

Dans un autre mode de réalisation avantageux, le joint et la première pièce ne forment qu'une seule pièce réalisée dans le premier matériau.

Dans un autre mode de réalisation avantageux, la première pièce est une ancre et la au moins une seconde pièce est une palette.

Un des avantages de ces modes de réalisation est de permettre de figer le réglage en cristallisant le joint en métal amorphe. En effet, en cristallisant un matériau amorphe, on lui enlève la capacité d'être mis dans un état visqueux en le chauffant jusqu'à une température comprise entre sa température de transition vitreuse et sa température de cristallisation. Ainsi remettre le joint sous forme amorphe nécessite de le mettre sous forme liquide et de le refroidir rapidement et donc de détruire le dispositif.

### BREVE DESCRIPTION DES FIGURES

Les buts, avantages et caractéristiques du procédé selon la présente invention apparaîtront plus clairement dans la description détaillée suivante d'au moins une forme de réalisation de l'invention donnée uniquement à titre d'exemple non limitatif et illustrée par les dessins annexés sur lesquels :
- la figure 1 représente de manière schématique une ancre avant processus de fabrication ;
- la figure 2 représente de manière schématique une ancre à la sortie du processus de fabrication;
- la figure 3 représente de manière schématique une ancre lors du procédé de réglage selon la présente invention;
- la figures 4 représente de manière schématique une ancre après avoir subi le procédé de réglage selon la présente invention, et
- la figure 5 représente de manière schématique une variante de l'ancre subissant le procédé de réglage selon la présente invention;

### DESCRIPTION DETAILLEE

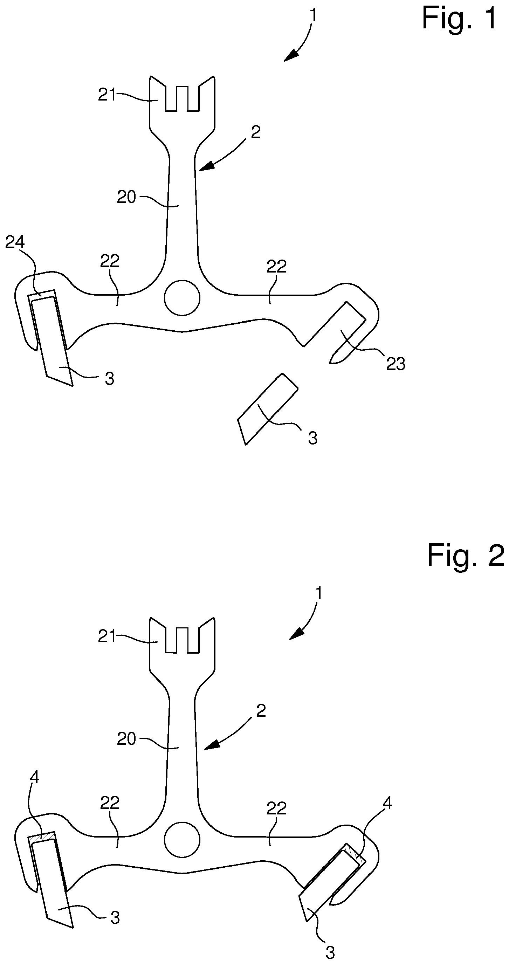

Sur les figures 1 et 2 est représenté un dispositif 1 comprenant une première pièce 2 et au moins une seconde pièce 3. Ce dispositif 1 peut être par exemple une partie d'un échappement de pièce d'horlogerie. Cet échappement 1 est constitué d'une ancre et d'une roue d'échappement coopérant ensemble. La rotation de cette dernière est régulée par l'ancre du système d'échappement dont les impulsions sont fournies par un balancier spiral. Le système d'échappement comporte ainsi une ancre montée en pivotement sur un axe. Cette ancre 2 constitue la première pièce et se présente sous la forme d'une baguette 20 munie, à une première extrémité, d'une fourchette 21 destinée à coopérer avec une cheville montée sur un plateau, et munie d'au moins deux bras 22 à une seconde extrémité. Cette ancre 2 est destinée à recevoir au moins une seconde pièce 3 c'est à dire des palettes afin de coopérer avec la roue d'échappement. Lors de son fonctionnement, l'ancre 2 pivote sur son axe de sorte que les palettes 3 entrent en contact avec les dents de la roue d'échappement afin de réguler la rotation des rouages.

Les palettes 3 sont fixées à la baguette 20 de l'ancre 2 au niveau de logements 23 agencés sur chacun des deux bras 22. Ces logements 23 ont des dimensions calculées pour laisser apparaître un interstice ou espace 24 entre ledit bras 22 et ladite palette 3 lorsque cette dernière est insérée dans le logement 23. Cet interstice 24 est utilisé pour qu'un joint 4, réalisé en un premier matériau, puisse être agencé entre ledit bras 22 de l'ancre 2 et ladite palette 3.

Dans un premier mode de réalisation de la présente invention, le joint 4 est réalisé en premier matériau qui est un matériau au moins partiellement amorphe comprenant au moins un élément métallique. Ce premier matériau peut être un alliage métallique au moins partiellement amorphe. Cet élément métallique peut être un élément métallique précieux tel que de l'or, du platine, du palladium, du rhénium, du ruthénium, du rhodium, de l'argent, de l'iridium ou de l'osmium. On comprendra par matériau au moins partiellement amorphe que le matériau est apte à se solidifier au moins partiellement en phase amorphe. De préférence, ledit premier matériau est totalement amorphe.

L'assemblage des palettes 3 à l'ancre 2 par l'intermédiaire du joint 4 est préalable à cette étape de réglage et peut être fait par différentes méthodes.

Pour modifier la position des palettes 3 de l'ancre 2, on exploite la propriété des matériaux amorphes qui permet à ces derniers d'avoir une viscosité qui diminue fortement dans un intervalle de température donné pour chaque matériau tout en restant amorphe.

La première étape de ce procédé de réglage consiste à se munir de ladite ancre 1 à laquelle les palettes 3 sont fixées.

La seconde étape consiste à faire monter en température au moins une partie de l'ancre 1. Avantageusement, les joints 4 subissent ladite montée en température. En effet, les joints 4 maintiennent les palettes 3 fixées à l'ancre 2 et c'est en agissant sur ces joints 4 qu'un réglage est possible. Les joints 4 sont chauffés jusqu'à une température comprise entre la température de transition vitreuse Tg et la température de cristallisation Tx du premier matériau. Cette montée en température a pour conséquence une diminution de la viscosité du premier matériau constitutif des joints 4.

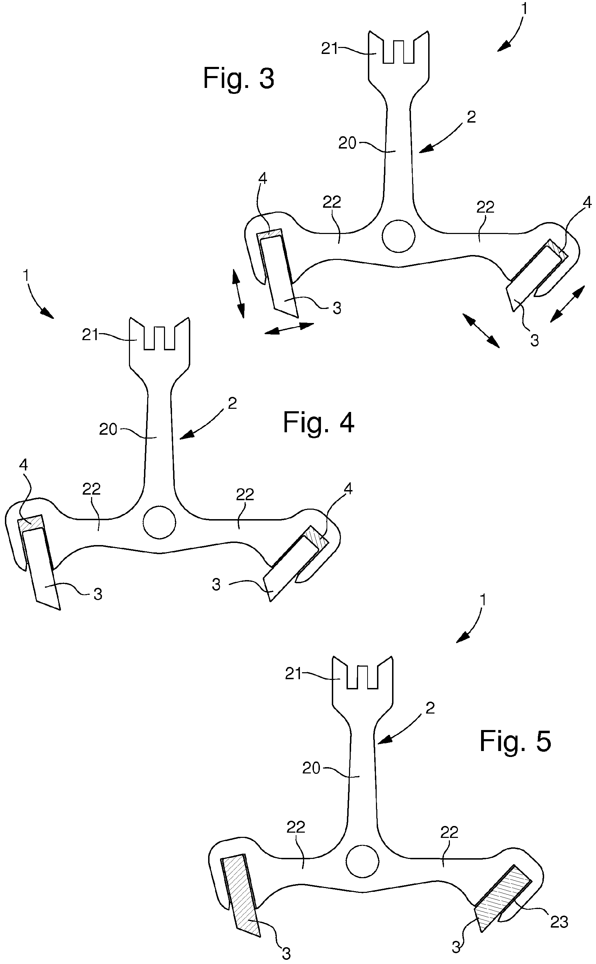

La troisième étape consiste à déplacer au moins une des palettes 3 afin de lui donner une position souhaitée comme visible à la figure 3. Ce déplacement est permis car le premier matériau est un alliage métallique amorphe ayant une viscosité très faible lorsqu'il est chauffé à une température comprise entre sa température de transition vitreuse Tg et sa température de cristallisation Tx. Cette faible viscosité permet de déplacer la ou les palettes 3 sans que le ou les joints 4 ne se détériorent ou ne cassent. Afin d'optimiser le procédé, on pourra adapter la température à laquelle les joints 4 sont chauffés pour obtenir une viscosité déterminée. En effet, la viscosité est dépendante de la température, c'est-à-dire que plus la température est élevée, plus la viscosité sera faible et inversement. Or, si la viscosité est trop faible, les déplacements de la palette 3 seront difficiles car la ou les palettes 3 se déplaceront trop facilement et donc le réglage perdra en précision. Au contraire, si la viscosité est trop élevée, il faudra appliquer plus de force pour déplacer la ou les palettes 3 et des risques de ruptures peuvent se présenter.

Une fois les palettes 3 placées selon la position désirée, une quatrième étape consiste à refroidir les joints 4 en métal amorphe de sorte à rester au moins partiellement amorphe et à figer la position desdites palettes 3 comme sur la figure 4. L'avantage dudit procédé est alors d'éviter tout dégazage de matière tout en assurant une très bonne résistance de la fixation de la palette au niveau de l'ancre 2. L'avantage est que les joints 4 sont toujours dans un état amorphe ce qui permet de pouvoir de nouveau modifier la position des palettes 3 au besoin.

Dans une première variante, il est prévu une étape supplémentaire ou cinquième étape pendant laquelle les joints 4 en métal amorphe sont cristallisés. Cette cristallisation est réalisée en chauffant ces joints 4 jusqu'à une température comprise entre la température de transition vitreuse Tg et la température de cristallisation Tx du matériau constitutif des joints. Le premier matériau est ensuite refroidi lentement pour permettre aux atomes de s'arranger selon une structure cristalline. Cette cristallisation permet de figer la position des palettes puisqu'après cette étape de cristallisation, il n'est plus possible de modifier la position de palettes 3 en chauffant les joints 4 entre la température de transition vitreuse Tg et la température de cristallisation Tx du matériau.

De plus, cette cristallisation peut, dans certains cas, entraîner une augmentation du volume du matériau qui passe d'un état amorphe à un état cristallisé. La conséquence de cette augmentation du volume est une augmentation de la contrainte appliquée par lesdits joints 4 sur ladite ancre 2 et sur les palettes 3. Ces palettes 3 sont alors maintenues à force et ainsi, elles ne risquent pas de se déplacer lors des chocs avec les dents de la roue d'échappement.

Dans un second mode de réalisation de la présente invention visible à la figure 5, le joint 4 et l'ancre 2 ne forment qu'une seule et même pièce. On comprend alors que l'ancre 2 est réalisée dans ledit premier matériau et donc en métal amorphe. L'ancre 2 fait alors office de joint 4.

La réalisation de l'ancre 2 peut se faire par formage à chaud ou par coulée. L'ancre 2 est ainsi réalisée en même temps que la fixation des palettes 3 à ladite ancre 2.

Une fois l'ancre 2 réalisée, il est possible de régler la position des palettes 3 si celles-ci ne sont pas placées correctement.

La première étape de ce procédé de réglage consiste donc à se munir de ladite ancre 2 à laquelle les palettes 3 sont fixées.

La seconde étape consiste à faire monter en température au moins une zone de l'ancre 2. La montée en température doit être effectuée de façon locale au niveau des zones de fixation entre la première pièce 2 et la seconde pièce 3. Dans le cas d'une ancre 2, ces zones sont les zones des logements des bras 22 où sont insérées les palettes 3. Ces zones sont chauffées jusqu'à une température comprise entre la température de transition vitreuse Tg et la température de cristallisation Tx du métal amorphe. Cette montée en température provoque une diminution de la viscosité du métal amorphe sans que celui-ci perde son état amorphe.

La troisième étape est similaire à la troisième étape du premier mode de réalisation et consiste alors à déplacer selon trois axes : longueur, largeur et hauteur, au moins une des palettes 3 afin que lui donner une position souhaitée. Afin d'optimiser le procédé, on pourra adapter la température à laquelle les joints 4 sont chauffés afin d'obtenir une viscosité voulue.

Une fois les palettes 3 placées selon la position désirée, une quatrième étape consiste à refroidir les zones en métal amorphe de sorte à rester au moins partiellement amorphe et à figer la position desdites palettes. L'avantage dudit procédé est alors d'éviter tout dégazage de matière tout en assurant une très bonne résistance de la fixation de la palette au niveau de l'ancre.

On comprendra que ce procédé de réglage peut être de nouveau exécuté si les réglages réalisés ne sont pas encore parfaits ou dans le cas d'une modification ultérieure de la position des palettes 3.

Une cinquième étape facultative peut être réalisée. Cette étape consiste en une cristallisation au moins partielle des zones au niveau desquelles les palettes 3 sont fixées. Cette étape est réalisée par montée en température des zones au niveau desquelles les palettes 3 sont fixées. La température est augmentée pour atteindre une température comprise entre la température de transition vitreuse Tg et la température de cristallisation Tx voire de fusion du métal amorphe. Celui-ci voit sa viscosité diminuer tout en restant amorphe. Puis, ces zones chauffées sont gardées à cette température puis sont refroidies lentement de sorte qu'elles se structurent sous forme cristalline. La température et le temps de refroidissement et le temps de maintient du métal à ladite température sont des paramètres permettant de fixer le taux de cristallisation. Cette cristallisation est utilisée afin de figer les réglages effectués auparavant. En effet, lorsqu'un matériau est sous forme cristalline, il ne peut pas subir le procédé de réglage selon la présente invention. La seule façon serait de la mettre sous forme amorphe c'est-à-dire de le chauffer au dessus de sa température de fusion pour rendre ledit matériau liquide et ensuite refroidir rapidement en dessous de sa température de transition vitreuse pour qu'il soit amorphe. Or, dans le cadre d'un joint 4 entre une palette 3 et une ancre 2, la mise en fusion du joint entraîne au moins une détérioration du joint 4 voire une destruction du dispositif 1 rendant un réglage impossible.

Dans une variante de ce second mode de réalisation, il peut être prévu que les palettes 3 soient également réalisées en métal amorphe. De préférence, le métal amorphe utilisé pour les palettes 3 sera différent de celui utilisé pour l'ancre 2 de sorte que, lorsque le métal amorphe de l'ancre 2 est chauffé pour atteindre une température comprise entre sa température de transition vitreuse Tg et sa température de cristallisation Tx, le métal amorphe des palettes ne devient pas visqueux comme le métal amorphe de ladite ancre 2.

On comprendra que diverses modifications et/ou améliorations et/ou combinaisons évidentes pour l'homme du métier peuvent être apportées aux différents modes de réalisation de l'invention exposée ci-dessus sans sortir du cadre de l'invention défini par les revendications annexées.

Bien entendu, on comprendra que ce procédé de réglage n'est pas limité au réglage de la position des palettes 3 et d'une ancre 2. Ce procédé peut être utilisé dans le cadre d'autres dispositifs. Les dispositifs utilisant ce procédé de réglage sont par exemple un dispositif comprenant une roue chassée sur un axe, ledit dispositif comprenant un joint placé entre ledit axe et ladite roue. La position de la roue peut alors être réglée par application du procédé de réglage sur ledit joint. Le réglage peut être fait le long de l'axe ou angulairement.

## Revendications

1. Procédé de réglage d'un dispositif (1) comprenant une première pièce (2) et au moins une seconde pièce (3), ladite au moins une seconde pièce étant fixée à la première pièce par l'intermédiaire d'un joint (4) lors d'une étape préalable d'assemblage, ledit joint étant réalisé en un premier matériau agencé entre lesdites première et seconde pièces, **caractérisé en ce que** ledit premier matériau est un alliage métallique totalement amorphe et **en ce que** ledit procédé comprend en outre les étapes suivantes :
- chauffer au moins ledit joint à une température de chauffage comprise entre la température de transition vitreuse et la température de cristallisation du premier matériau;
- modifier la position de ladite au moins une seconde pièce jusqu'à obtenir la position déterminée désirée ;
- refroidir au moins ledit joint de sorte qu'il garde son état au moins partiellement amorphe.

2. Procédé selon la revendication 1, **caractérisé en ce que** ledit alliage métallique comprend au moins un élément métallique du type précieux et choisi dans le groupe formé par l'or, le platine, le palladium, le rhénium, le ruthénium, le rhodium, l'argent, l'iridium ou l'osmium.

3. Procédé selon l'une des revendications précédentes, **caractérisé en ce que** dans l'étape de chauffage, la température de chauffage est sélectionnée pour obtenir une viscosité déterminée du premier matériau.

4. Procédé selon l'une des revendications précédentes, **caractérisé en ce qu'**il comprend en outre une étape successive de cristallisation dudit premier matériau consistant à chauffer ledit premier matériau à une température comprise entre sa température de transition vitreuse et sa température de fusion, à maintenir ledit matériau durant un certain temps à cette température, et à refroidir.

5. Procédé selon la revendication 4, **caractérisé en ce que** la température et le temps de maintient dudit premier matériau est choisi de façon à aboutir à un taux de cristallisation déterminé.

6. Procédé selon l'une des revendications précédentes, **caractérisée en ce que** le joint (4) et la première pièce (2) ne forment qu'une seule pièce réalisée dans le premier matériau.

7. Procédé selon l'une des revendications précédentes, **caractérisé en ce que** la première pièce (2) est une ancre et la au moins une seconde pièce (3) est une palette.

## Patentansprüche

1. Verfahren zur Regulierung einer Vorrichtung (1), umfassend ein erstes Teil (2) und mindestens ein zweites Teil (3), wobei das mindestens eine zweite Teil während eines vorhergehenden Montageschrittes über ein Kontaktmittel (4) an dem ersten Teil befestigt wird, wobei das Kontaktmittel aus einem ersten Material hergestellt ist, das zwischen dem ersten und dem zweiten Teil angeordnet ist, **dadurch gekennzeichnet, dass** das erste Material eine vollständig amorphe Metalllegierung ist und dass das Verfahren weiterhin die folgenden Schritte umfasst:
- Erwärmen mindestens des Kontaktmittels auf eine Erwärmungstemperatur zwischen der Glasübergangstemperatur und der Kristallisationstemperatur des ersten Materials;
- Verändern der Position des mindestens einen zweiten Teils, bis die gewünschte bestimmte Position erreicht ist;
- Abkühlen mindestens des Kontaktmittels, derart, dass es seinen mindestens teilweise amorphen Zustand beibehält.

2. Verfahren nach Anspruch 1, **dadurch gekennzeichnet, dass** die Metalllegierung mindestens ein Edelmetallelement umfasst und aus der Gruppe ausgewählt ist, die aus Gold, Platin, Palladium, Rhenium, Ruthenium, Rhodium, Silber, Iridium und Osmium gebildet ist.

3. Verfahren nach einem der vorhergehenden Ansprüche, **dadurch gekennzeichnet, dass** im Erwärmungsschritt die Erwärmungstemperatur gewählt wird, um eine bestimmte Viskosität des ersten Materials zu erhalten.

4. Verfahren nach einem der vorhergehenden Ansprüche, **dadurch gekennzeichnet, dass** es weiterhin einen nachfolgenden Schritt des Kristallisierens des ersten Materials umfasst, der darin besteht, das erste Material auf eine Temperatur zwischen seiner Glasübergangstemperatur und seiner Schmelztemperatur zu erwärmen, das Material während einer bestimmten Zeit auf dieser Temperatur zu halten und es abzukühlen.

5. Verfahren nach Anspruch 4, **dadurch gekennzeichnet, dass** die Temperatur und die Haltezeit des ersten Materials derart gewählt werden, dass ein bestimmter Kristallisationsanteil erreicht wird.

6. Verfahren nach einem der vorhergehenden Ansprüche, **dadurch gekennzeichnet, dass** das Kontaktmittel (4) und das erste Teil (2) ein einziges Teil bilden, das aus dem ersten Material hergestellt ist.

7. Verfahren nach einem der vorhergehenden Ansprüche, **dadurch gekennzeichnet, dass** das erste Teil (2) ein Anker ist und das mindestens eine zweite Teil (3) eine Palette ist.

## Claims

1. Process for adjusting a device (1) comprising a first piece (2) and at least one second piece (3), wherein said at least one second piece is fixed to the first piece by means of a joint (4) during a preliminary assembly step, said joint (4) being made from a first material arranged between said first and second pieces, **characterised in that** said first material is an completely amorphous metal alloy, and **in that** said process additionally comprises the following steps:
- heating at least said joint to a heating temperature in the range of between the glass transition temperature and the crystallisation temperature of the first material;
- modifying the position of said at least one second piece until the desired determined position is obtained;
- cooling at least said joint so that it retains its at least partially amorphous state.

2. Process according to claims 1, **characterised in that** said metal alloy comprises at least one precious metal element selected from the group formed by gold, platinum, palladium, rhenium, ruthenium, rhodium, silver, iridium or osmium.

3. Process according to one of the preceding claims, **characterised in that** in the heating step the heating temperature is selected to obtain a determined viscosity of the first material.

4. Process according to one of the preceding claims, **characterised in that** it additionally comprises a successive step of crystallisation of said first material consisting of heating said first material to a temperature in the range of between its glass transition temperature and its melting temperature, holding said material at this temperature for a certain period and cooling it.

5. Process according to claim 4, **characterised in that** the temperature and holding time of said first material is selected in order to reach a determined crystallisation rate.

6. Process according to one of the preceding claims, **characterised in that** the joint (4) and the first piece (2) only form a single piece made from the first material.

7. Process according to one of the preceding claims, **characterised in that** the first piece (2) is an anchor and the at least one second piece (3) is a pallet.
